(19) Europäisches Patentamt
European Patent Office
Office européen des brevets

(11) **EP 4 494 922 A1**

(12) **EUROPÄISCHE PATENTANMELDUNG**

(43) Veröffentlichungstag:
    **22.01.2025 Patentblatt 2025/04**

(21) Anmeldenummer: **24187528.5**

(22) Anmeldetag: **09.07.2024**

(51) Internationale Patentklassifikation (IPC):
    **B60L 53/302** (2019.01)    **B60L 53/53** (2019.01)
    **B60L 53/62** (2019.01)

(52) Gemeinsame Patentklassifikation (CPC):
    **B60L 53/302; B60L 53/53; B60L 53/62**

(84) Benannte Vertragsstaaten:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Benannte Erstreckungsstaaten:
    **BA**
    Benannte Validierungsstaaten:
    **GE KH MA MD TN**

(30) Priorität: **13.07.2023   DE 102023118660**

(71) Anmelder: **ads-tec Energy GmbH
    72622 Nürtingen (DE)**

(72) Erfinder:
    • **BAREIß, Simon
      73635 Rudersberg (DE)**
    • **RAMIN, Jörg
      73230 Kirchheim (DE)**

(74) Vertreter: **Kordel, Mattias et al
    Gleiss Große Schrell und Partner mbB
    Patentanwälte Rechtsanwälte
    Leitzstrasse 45
    70469 Stuttgart (DE)**

(54) **VERFAHREN ZUM BETREIBEN EINER LADESTATION, STEUERVORRICHTUNG ZUR DURCHFÜHRUNG EINES SOLCHEN VERFAHRENS UND LADESTATION MIT EINER SOLCHEN STEUERVORRICHTUNG**

(57)     Die Erfindung betrifft ein Verfahren zum Betreiben einer Ladestation (1), insbesondere für Elektrofahrzeuge, wobei
- ein Lastzustand einer Klimatisierungsvorrichtung (7) der Ladestation (1) ermittelt wird, und wobei
- eine Ladeleistung der Ladestation (1) in Abhängigkeit von dem ermittelten Lastzustand beeinflusst wird.

Fig. 1

Processed by Luminess, 75001 PARIS (FR)

**Beschreibung**

Die Erfindung betrifft ein Verfahren zum Betreiben einer Ladestation, insbesondere für Elektrofahrzeuge, eine Steuervorrichtung, die eingerichtet ist zur Durchführung eines solchen Verfahrens und eine Ladestation mit einer solchen Steuervorrichtung.

Bei Ladestationen, die eine aktive Klimatisierungsvorrichtung aufweisen, kann es abhängig von den Umgebungsbedingungen und einer momentanen elektrischen Last oder einem Lastverlauf zu Situationen kommen, in denen vorbestimmte Temperaturbegrenzungen für Leistungselektronik-Bauteile der Ladestation oder - im Fall einer Ladestation mit elektrischem Energiespeicher, insbesondere zur Zwischenpufferung elektrischer Energie aus dem Stromnetz, insbesondere als "Booster" für die aktive Ladeleistung - den elektrischen Energiespeicher, insbesondere für dessen Batteriezellen, erreicht werden. In einem solchen Fall muss die momentane Ladeleistung drastisch reduziert oder sogar der Ladevorgang ganz unterbrochen werden, was insbesondere aufgrund der damit verbundenen Verzögerungen äußerst nachteilig und ärgerlich für Personen oder Institutionen ist, die gerade elektrische Komponenten, insbesondere ein Elektrofahrzeug, an der Ladestation laden wollen.

Der Erfindung liegt daher die Aufgabe zugrunde, ein Verfahren zum Betreiben einer Ladestation, insbesondere für Elektrofahrzeuge, eine Steuervorrichtung, die eingerichtet ist zur Durchführung eines solchen Verfahrens und eine Ladestation mit einer solchen Steuervorrichtung zu schaffen, wobei die genannten Nachteile zumindest reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem ein Verfahren zum Betreiben einer Ladestation, insbesondere für Elektrofahrzeuge, geschaffen wird, wobei ein Lastzustand einer Klimatisierungsvorrichtung der Ladestation ermittelt wird, und wobei eine Ladeleistung der Ladestation in Abhängigkeit von dem ermittelten Lastzustand beeinflusst wird. Vorteilhaft können Situationen, in denen vorbestimmte Temperaturbegrenzungen für Leistungselektronik-Bauteile der Ladestation oder gegebenenfalls deren elektrischen Energiespeicher erreicht werden, vermieden werden, wenn die Ladeleistung - zumindest auch - in Abhängigkeit von dem Lastzustand der Klimatisierungsvorrichtung beeinflusst wird. Damit werden zugleich deutlich drastischere Reduktionen der Ladeleistung bis hin zu Unterbrechungen des Ladevorgangs vorteilhaft zumindest reduziert, vorzugsweise vermieden. Bei konventionellen Ladestationen werden typischerweise die Ladeleistung einerseits und der Betrieb der Klimatisierungsvorrichtung andererseits unabhängig voneinander gesteuert: Auf kritische Temperaturzustände der Leistungselektronik wird durch Abregeln der Ladeleistung reagiert, und unabhängig davon wird die Klimatisierungsvorrichtung abgeschaltet, wenn sie in einen Überlastzustand gerät. Die Erfinder haben nun insbesondere erkannt, dass kritische Temperaturzustände der Leistungselektronik und damit auch Abregelungen der Ladeleistung gerade dann auftreten können, wenn die Klimatisierungsvorrichtung eine Kapazitätsgrenze erreicht oder in einen Überlastzustand gerät und daher keine oder nur noch eine stark reduzierte Kühlungsleistung mehr erbringen kann. Vorteilhaft liegt daher der Erfindung der Gedanke zugrunde, den Betrieb der Ladestation derart zu steuern, dass ein Überlastzustand der Klimatisierungsvorrichtung nach Möglichkeit vermieden wird. Insbesondere wird - wie auch im Folgenden näher ausgeführt - der Betrieb der Ladestation mit Bezug auf die Ladeleistung, aber vorteilhaft auch mit Bezug auf den Betrieb von Sekundärverbrauchern der Ladestation wie beispielsweise einer Anzeigevorrichtung, auf das Ziel hin ausgerichtet oder abgestimmt, dass ein Überlastzustand der Klimatisierungsvorrichtung vermieden wird. Auf diese Weise ist die Einsatzbereitschaft der Klimatisierungsvorrichtung im Vergleich zu konventionellen Ladestationen deutlich ausgeweitet, wodurch die Ladeleistung zumindest seltener drastisch reduziert oder sogar ein Ladevorgang unterbrochen werden muss. Insbesondere wird ein weniger unterbrochener oder sogar dauerhafter Betrieb der Klimatisierungsvorrichtung ermöglicht und deren mittlere Kühlleistung erhöht. Somit wird zugleich auch die System-Verfügbarkeit der Ladestation erhöht. Dies wiederum steigert den Komfort und das Ladeerlebnis aus Sicht der Personen oder Institutionen, die die Ladestation nutzen. Außerdem steigt vorteilhaft durch die Vermeidung von Überlastzuständen und insbesondere von zusätzlichen Startvorgängen auch die Lebensdauer der Klimatisierungsvorrichtung selbst. Schließlich wird vorteilhaft durch die Vermeidung von Übertemperatur ein zusätzlicher Komponentenschutz verwirklicht.

Als Ladestation wird in der Elektrotechnik jedwede, insbesondere stationäre oder mobile, Vorrichtung oder elektrische Anlage bezeichnet, welche dazu dient, mobilen akkubetriebenen elektrischen Vorrichtungen, Geräten, Maschinen oder Kraftfahrzeugen durch einfaches Einstellen oder Einstecken Energie zuzuführen, ohne den Antriebsenergiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Ladestation als eine Ladesäule ausgebildet. Insbesondere weist die Ladestation mindestens einen Ladepunkt, insbesondere genau einen Ladepunkt oder genau zwei Ladepunkte, auf.

Insbesondere ist die Ladestation als Schnellladestation ausgebildet. In einer Ausführungsform ist die Ladestation als batteriegestützte Ladestation, insbesondere als batteriegestützte Schnellladestation, ausgebildet.

Unter einem Lastzustand der Klimatisierungsvorrichtung wird im Kontext der vorliegenden technischen Lehre insbesondere ein thermischer Lastzustand der Klimatisierungsvorrichtung verstanden.

Unter einer Ladeleistung wird im Kontext der vorliegenden technischen Lehre insbesondere eine elektrische Ladeleistung, insbesondere ein Ladestrom und/oder eine Ladespannung, der Ladestation verstanden.

Unter einer Klimatisierungsvorrichtung wird im Kontext der vorliegenden technischen Lehre insbesondere eine aktive Klimatisierungsvorrichtung, insbesondere eine kältetechnische Anlage, verstanden. Die Klimatisierungsvorrichtung kann als Kompressionskältemaschine, als Absorptionskältemaschine, als Adsorptionskältemaschine, als Dampfstrahlkältemaschine oder als Kältemaschine, die den Joule-Thomson-Effekt nutzt, ausgebildet sein.

In einer Ausführungsform ist die Klimatisierungsvorrichtung als Kompressionskältemaschine ausgebildet und weist einen geschlossenen Kältemittelkreislauf auf, der - in der angegebenen Reihenfolge in Strömungsrichtung des Kältemittels - folgende Kältekomponenten aufweist: einen Kältemittelverdichter, einen Kondensator, eine Drosselvorrichtung oder ein Entspannungsventil, und einen Verdampfer. Insbesondere ist die Klimatisierungsvorrichtung eingerichtet zur Durchführung eines thermodynamischen Kreisprozesses.

In einer Ausführungsform ist die Klimatisierungsvorrichtung eingerichtet, um einen zur Kühlung der Ladestation vorgesehenen Kühlluftstrom zu kühlen. In einer anderen Ausführungsform ist die Klimatisierungsvorrichtung eingerichtet, um einen zur Kühlung der Ladestation vorgesehenen Kühlmedienkreislauf, insbesondere Kühlwasserkreislauf, zu kühlen. In wieder einer anderen Ausführungsform ist die Klimatisierungsvorrichtung eingerichtet, um sowohl einen zur Kühlung der Ladestation vorgesehenen Kühlluftstrom als auch einen ebenfalls zur Kühlung der Ladestation vorgesehenen Kühlmedienkreislauf, insbesondere Kühlwasserkreislauf, zu kühlen. Dabei ist es insbesondere möglich, dass mittels des Kühlluftstroms ein elektrischer Energiespeicher der Ladestation gekühlt wird, während mittels des Kühlmedienkreislaufs eine Leistungselektronik der Ladestation gekühlt wird. In einer weiteren Ausführungsform ist insbesondere vorgesehen, dass der Kühlluftstrom, der zur Kühlung des elektrischen Energiespeichers verwendet wird, direkt durch den Kühlmedienkreislauf gekühlt wird, wobei der Kühlmedienkreislauf außerdem direkt die Leistungselektronik der Ladestation gekühlt, und wobei der Kühlmedienkreislauf selbst durch die Klimatisierungsvorrichtung rückgekühlt wird. Insbesondere ist es möglich, dass die Klimatisierungsvorrichtung ausschließlich zur Rückkühlung des Kühlmedienkreislaufs dient, wobei die verschiedenen Komponenten der Ladestation mittelbar oder unmittelbar durch den Kühlmedienkreislauf gekühlt werden.

In einer Ausführungsform wird der Lastzustand der Klimatisierungsvorrichtung wiederholt, insbesondere zyklisch, insbesondere mit vorbestimmter zeitlicher Taktung, insbesondere mit einer Frequenz von 1 Hz bis 10 Hz, besonders bevorzugt 5 Hz, ermittelt, wobei daraufhin die Ladeleistung abhängig von dem ermittelten Lastzustand beeinflusst und optional die im Folgenden beschriebenen weiteren Verfahrensschritte durchgeführt werden. Insbesondere wird somit das Verfahren insgesamt wiederholt, insbesondere zyklisch, insbesondere mit der vorbestimmten zeitlichen Taktung, insbesondere mit einer Frequenz von 1 Hz bis 10 Hz, besonders bevorzugt 5 Hz, durchgeführt.

In einer Ausführungsform wird die Ladeleistung in Abhängigkeit von dem ermittelten Lastzustand eingestellt. Alternativ oder zusätzlich wird die Ladeleistung in Abhängigkeit von dem ermittelten Lastzustand begrenzt.

Gemäß einer Weiterbildung der Erfindung ist vorgesehen, dass als die Ladeleistung eine aktive Ladeleistung der Ladestation, mit welcher ein Antriebsenergiespeicher einer mobilen Vorrichtung, insbesondere eines Elektrofahrzeugs, durch die Ladestation geladen wird, beeinflusst wird. Vorteilhaft wird mit der aktiven Ladeleistung, insbesondere dem aktiven Ladestrom, eine Hauptwärmequelle der Ladestation und damit ein wesentlicher Belastungsfaktor für die Klimatisierungsvorrichtung zur Betrachtung für die Vermeidung von Überlastzuständen der Klimatisierungsvorrichtung herangezogen.

Alternativ oder zusätzlich ist vorgesehen, dass als die Ladeleistung eine passive Ladeleistung der Ladestation, mit welcher ein elektrischer Energiespeicher der Ladestation aus einem Stromnetz geladen wird, beeinflusst wird. Vorteilhaft kann somit das Verfahren in besonders sinnvoller Weise auch für solche Ladestation angewendet werden, die einen elektrischen Energiespeicher - insbesondere zur Zwischenpufferung elektrischer Energie aus dem Stromnetz, insbesondere als "Booster" für die aktive Ladeleistung - aufweisen, wobei mit der passiven Ladeleistung eine wichtige Wärmequelle und somit ebenfalls ein wesentlicher Belastungsfaktor für die Klimatisierungsvorrichtung zur Betrachtung für die Vermeidung von Überlastzuständen herangezogen wird.

Besonders vorteilhaft werden in einer Ausführungsform als Ladeleistung sowohl die aktive Ladeleistung als auch die passive Ladeleistung in Abhängigkeit von dem ermittelten Lastzustand der Klimatisierungsvorrichtung beeinflusst.

Gemäß einer Weiterbildung der Erfindung ist vorgesehen, dass in Abhängigkeit von dem ermittelten Lastzustand ein Abregelungsfaktor bestimmt wird, wobei die Ladeleistung in Abhängigkeit von dem Abregelungsfaktor beeinflusst, insbesondere begrenzt oder eingestellt wird. Dies stellt eine insbesondere mit Blick auf einen Rechenaufwand besonders einfache und effiziente Ausgestaltung des Verfahrens dar. In einer Ausführungsform, bei der sowohl die aktive als auch die passive Ladeleistung beeinflusst werden, kann gemäß einer ersten Alternative ein gemeinsamer, das heißt identischer Abregelungsfaktor für die aktive und die passive Ladeleistung bestimmt werden, oder es kann gemäß einer zweiten Alternative ein erster Abregelungsfaktor für die aktive Ladeleistung bestimmt werden, wobei ein zweiter Abregelungsfaktor für die passive Ladeleistung bestimmt wird, wobei der zweite Abregelungsfaktor von dem ersten Abregelungsfaktor abweichen kann. Insgesamt können also gemäß der zweiten Alternative verschiedene Abregelungsfaktoren einerseits für die aktive Ladeleistung und andererseits für die passive Ladeleistung bestimmt werden.

Insbesondere wird die Ladeleistung in Abhängigkeit von dem Abregelungsfaktor reduziert. In einer Ausgestaltung wird der Abregelungsfaktor aus dem Intervall [0,1] bestimmt. In einer Ausführungsform wird eine nominale Ladeleistung mit der Differenz des Abregelungsfaktors zu 1 multipliziert, um eine maximale Ladeleistung zu erhalten. Somit wird die maximale Ladeleistung effektiv reduziert, wenn der Abregelungsfaktor größer ist als 0. Wird der Abregelungsfaktor mit $f$ bezeichnet, wird die nominale Ladeleistung $P_{nom}$ mit $(1-f)$ multipliziert, woraus die maximale Ladeleistung $P_{max}$ resultiert:

$$P_{max} = (1-f)P_{nom}\,, \tag{1}$$

Die aktuelle Ladeleistung der Ladestation wird in dieser Ausgestaltung auf die maximale Ladeleistung $P_{max}$ und somit abhängig von dem Abregelungsfaktor und damit abhängig von dem ermittelten Lastzustand begrenzt. Beträgt der Abregelungsfaktor $f = 0$, erfolgt effektiv keine Begrenzung, und die aktuelle Ladeleistung kann bis auf die nominale Ladeleistung als maximale Ladeleistung ansteigen; beträgt der Abregelungsfaktor $f = 1$, wird die Ladeleistung auf null begrenzt. Ist die aktuelle Ladeleistung beispielsweise aufgrund einer entsprechenden Anforderung einer zu ladenden Vorrichtung, beispielsweise eines zu ladenden Elektrofahrzeugs, kleiner als die maximale Ladeleistung, tritt kein reduzierender Effekt ein. Somit ist der Abregelungsfaktor bei kleiner tatsächlicher Ladeleistung im Wesentlichen ein Maß für die thermische Last, und seine reduzierende Wirkung ergibt sich in der Regel erst bei höherer Ladeleistung.

Gemäß einer Weiterbildung der Erfindung ist vorgesehen, dass der Lastzustand ermittelt wird, indem mindestens eine Lastgröße der Klimatisierungsvorrichtung mit einem vorbestimmten Lastgrößen-Zielwert verglichen wird, der der mindestens einen Lastgröße zugeordnet ist. Vorteilhaft stellt dies eine ebenso einfache wie sichere Vorgehensweise zur Ermittlung des Lastzustands dar.

Gemäß einer Weiterbildung der Erfindung ist vorgesehen, dass die mindestens eine Lastgröße ausgewählt ist aus einer Kondensatortemperatur der Klimatisierungsvorrichtung, einem Kondensatordruck der Klimatisierungsvorrichtung, und einer Kombination der genannten Lastgrößen. Vorteilhaft sind die hier genannten Lastgrößen in besonderer Weise geeignet, um den Lastzustand der Klimatisierungsvorrichtung zu ermitteln, insbesondere da in diese Lastgrößen bereits alle relevanten Umstände und auch Umgebungsbedingungen - gerade auch mit Blick auf eine Rückkühlung der Klimatisierungsvorrichtung - intrinsisch eingehen. Die genannten Lastgrößen berücksichtigen somit in einfacher Weise insbesondere sowohl die thermische Belastung der Klimatisierungsvorrichtung als auch eine momentane Rückkühlleistung, beispielsweise aufgrund einer vorliegenden Temperaturdifferenz zur Umgebung.

Unter einer Kondensatortemperatur wird dabei im Kontext der vorliegenden technischen Lehre insbesondere eine Temperatur verstanden, die charakteristisch ist für eine Kondensationstemperatur und/oder einen Kondensationsdruck des Kältemittels im Kondensator der Klimatisierungsvorrichtung. In einer Ausgestaltung kann die Kondensatortemperatur unmittelbar die Kondensationstemperatur des Kältemittels in dem Kondensator sein. In einer anderen Ausgestaltung kann als die Kondensatortemperatur beispielsweise eine Temperatur eines warmen Zweigs eines thermisch mit dem Kondensator zur Rückkühlung wirkverbundenen Rückkühl-Kreislaufs, beispielsweise eines Rückkühl-Kühlmedienkreislaufs, insbesondere eines Rückkühl-Kühlwasserkreislaufs, erfasst werden. In wieder einer anderen Ausgestaltung kann die Kondensatortemperatur stromaufwärts oder stromabwärts des Kondensators im Kältemittelkreislauf der Klimatisierungsvorrichtung erfasst werden.

Unter einem Kondensatordruck wird im Kontext der vorliegenden technischen Lehre insbesondere ein Druck verstanden, der charakteristisch ist für den Kondensationsdruck und/oder die Kondensationstemperatur des Kältemittels im Kondensator der Klimatisierungsvorrichtung. In einer Ausgestaltung kann der Kondensatordruck unmittelbar der Kondensationsdruck des Kältemittels in dem Kondensator sein. In einer anderen Ausgestaltung kann der Kondensatordruck stromaufwärts oder stromabwärts des Kondensators im Kältemittelkreislauf der Klimatisierungsvorrichtung erfasst werden.

Gemäß einer Weiterbildung der Erfindung ist vorgesehen, dass der Abregelungsfaktor durch einen Regler bestimmt wird, in den ein momentaner Wert der mindestens einen Lastgröße als Ist-Wert und der der mindestens einen Lastgröße zugeordnete vorbestimmte Lastgrößen-Zielwert als Soll-Wert eingehen, wobei der Abregelungsfaktor in Abhängigkeit einer Regelabweichung des Ist-Werts von dem Soll-Wert ermittelt, insbesondere berechnet wird. Vorteilhaft kann so der Abregelungsfaktor in einfacher, schneller, wenig rechenintensiver und zugleich präziser Weise bestimmt werden.

In einer Ausführungsform gehen in den Regler als Ist-Wert ein Ist-Kondensatordruck, insbesondere Ist-Kondensationsdruck, der Klimatisierungsvorrichtung und als Soll-Wert ein Soll-Kondensatordruck, insbesondere Soll-Kondensationsdruck, für die Klimatisierungsvorrichtung ein.

In einer Ausgestaltung wird als der Regler zur Bestimmung des Abregelungsfaktors ein Proportional-Integral-Regler (PI-Regler) verwendet.

Es ist möglich, dass Regelparameter des Reglers durch einen Betreiber der Ladestation parametrierbar sind. Insbesondere ist es möglich, dass mindestens ein Regelparameter, ausgewählt aus einer Regelverstärkung und einer Nachstellzeit, durch den Betreiber eingestellt werden kann. Insbesondere können in einer Ausgestaltung sowohl die Regelverstärkung als auch die Nachstellzeit durch den Betreiber eingestellt werden.

Der Kondensatordruck, insbesondere der Kondensationsdruck, kann beispielsweise bei Verwendung von R513a als Kältemittel einen zulässigen Wertebereich von 1 bar bis 30 bar haben. In einer Ausführungsform beträgt der Soll-Kondensatordruck, insbesondere der Soll-Kondensationsdruck, von 18 bar bis 25 bar. Für andere Kältemittel können andere Werte gelten beziehungsweise gewählt werden.

Gemäß einer Weiterbildung der Erfindung ist vorgesehen, dass in einem Überlast-Prüfschritt geprüft wird, ob ein Überlastzustand der Klimatisierungsvorrichtung vorliegt, wobei zumindest eine weitere ansteuerbare Komponente der Ladestation zumindest mit reduzierter Leistung betrieben - oder abgeschaltet - wird, wenn in dem Überlast-Prüfschritt festgestellt wird, dass ein Überlastzustand der Klimatisierungsvorrichtung vorliegt. Vorteilhaft kann die Klimatisierungsvorrichtung auf diese Weise zusätzlich schnell und effizient entlastet werden, insbesondere indem weitere Quellen von Abwärme mit reduzierter Leistung betrieben oder sogar abgeschaltet werden.

Unter einem Überlastzustand wird im Kontext der vorliegenden technischen Lehre insbesondere ein thermischer Überlastzustand der Klimatisierungsvorrichtung verstanden.

Die zumindest eine weitere ansteuerbare Komponente ist in einer Ausgestaltung ausgewählt aus einer Gruppe, bestehend aus: einer Energiespeicher-Kühlung, die eingerichtet ist zur Kühlung des Energiespeichers der Ladestation, einer Anzeigevorrichtung, insbesondere einem Außendisplay zur Bereitstellung von werblichen oder unterhaltenden Inhalten für Personen, die an der Ladestation laden, einer Hintergrundbeleuchtung der Anzeigevorrichtung, und einer Kombination aus mindestens zwei der genannten ansteuerbaren Komponenten.

Gemäß einer Weiterbildung der Erfindung ist vorgesehen, dass in dem Überlast-Prüfschritt festgestellt wird, dass der Überlastzustand vorliegt, wenn der Lastzustand - insbesondere der Abregelungsfaktor und/oder die mindestens eine Lastgröße als für den Lastzustand charakteristische oder den Lastzustand repräsentierende Parameter - einen vorbestimmten ersten Lastzustands-Schwellenwert überschreitet, und zusätzlich mindestens ein weiterer Wärmeparameter der Ladestation einen zugeordneten ersten Wärmeparameter-Schwellenwert überschreitet. Dieser Vorgehensweise liegt der Gedanke zugrunde, dass einer der genannten Parameter für sich genommen nicht zwingend aussagekräftig sein muss: Überschreitet beispielsweise der für den Lastzustand charakteristische Parameter den vorbestimmten ersten Lastzustands-Schwellenwert, jedoch überschreitet zugleich keiner der weiteren Wärmeparameter den zugeordneten ersten Wärmeparameter-Schwellenwert, liegt zwar eine hohe thermische Last der Klimatisierungsvorrichtung vor, diese kann aber noch bewältigt werden, insbesondere durch die Beeinflussung, insbesondere Begrenzung der Ladeleistung. Überschreitet umgekehrt einer der weiteren Wärmeparameter den zugeordneten ersten Wärmeparameter-Schwellenwert, jedoch überschreitet der für den Lastzustand charakteristische Parameter den vorbestimmten ersten Lastzustands-Schwellenwert nicht, liegt trotz hoher Temperatur - noch - kein thermischer Überlastzustand vor.

Insbesondere wird in dem Überlast-Prüfschritt geprüft, ob der Lastzustand oder einer der für den Lastzustand charakteristischen Parameter den vorbestimmten ersten Lastzustands-Schwellenwert überschreitet, und ob zusätzlich der mindestens eine weitere Wärmeparameter der Ladestation den zugeordneten ersten Wärmeparameter-Schwellenwert überschreitet.

In einer Ausgestaltung wird in dem Überlast-Prüfschritt geprüft, ob - und es wird festgestellt, dass der Überlastzustand vorliegt, wenn - der Lastzustand oder einer der für den Lastzustand charakteristischen Parameter den vorbestimmten ersten Lastzustands-Schwellenwert überschreitet, und zusätzlich mindestens zwei weitere Wärmeparameter, insbesondere alle weiteren Wärmeparameter, der Ladestation den jeweils zugeordneten ersten Wärmeparameter-Schwellenwert überschreiten.

Gemäß einer Weiterbildung der Erfindung ist vorgesehen, dass in dem Überlast-Prüfschritt festgestellt wird, dass kein Überlastzustand vorliegt, wenn der Lastzustand - insbesondere der Abregelungsfaktor und/oder die mindestens eine Lastgröße als die für den Lastzustand charakteristischen oder den Lastzustand repräsentierenden Parameter - einen vorbestimmten zweiten Lastzustands-Schwellenwert unterschreitet, und zusätzlich der mindestens eine weitere Wärmeparameter einen zugeordneten zweiten Wärmeparameter-Schwellenwert unterschreitet.

Insbesondere wird in dem Überlast-Prüfschritt geprüft, ob der Lastzustand oder einer der für den Lastzustand charakteristischen Parameter den vorbestimmten zweiten Lastzustands-Schwellenwert unterschreitet, und ob zusätzlich der mindestens eine weitere Wärmeparameter der Ladestation den zugeordneten zweiten Wärmeparameter-Schwellenwert unterschreitet.

In einer Ausgestaltung wird in dem Überlast-Prüfschritt geprüft, ob - und es wird festgestellt, dass kein Überlastzustand vorliegt, wenn - der Lastzustand oder einer der für den Lastzustand charakteristischen Parameter den vorbestimmten zweiten Lastzustands-Schwellenwert unterschreitet, und zusätzlich mindestens zwei weitere Wärmeparameter, insbesondere alle weiteren Wärmeparameter, der Ladestation den jeweils zugeordneten zweiten Wärmeparameter-Schwellenwert unterschreiten.

In einer Ausgestaltung ist der vorbestimmte erste Lastzustands-Schwellenwert größer als der vorbestimmte zweite Lastzustands-Schwellenwert. Alternativ oder zusätzlich sind die ersten Wärmeparameter-Schwellenwerte jeweils größer als die zugeordneten zweiten Wärmeparameter-Schwellenwerte. Vorteilhaft ergibt sich auf diese Weise eine Hysterese in der Bestimmung des Überlastzustands.

Insbesondere ist der vorbestimmte zweite Lastzustands-Schwellenwert in einer Ausgestaltung gleich dem vorbestimmten ersten Lastzustands-Schwellenwert abzüglich eines Lastzustands-Hysteresewerts. Alternativ oder zusätzlich sind die ersten Wärmeparameter-Schwellenwerte jeweils gleich den zugeordneten zweiten Wärmeparameter-Schwellenwerten abzüglich jeweils zugeordneter Wärmeparameter-Hysteresewerte.

In einer anderen Ausgestaltung ist der vorbestimmte erste Lastzustands-Schwellenwert gleich dem vorbestimmten zweiten Lastzustands-Schwellenwert. Alternativ oder zusätzlich sind die einander zugeordneten ersten und zweiten Wärmeparameter-Schwellenwerte jeweils gleich.

Gemäß einer Weiterbildung der Erfindung ist vorgesehen, dass der mindestens eine weitere Wärmeparameter ausgewählt ist aus einer Gruppe, bestehend aus: einer Energiespeicher-Temperatur des elektrischen Energiespeichers der Ladestation, einer Kühlmedien-Temperatur eines Kühlmediums des Kühlmedienkreislaufs, und einer Kombination der genannten Wärmeparameter. Diese Wärmeparameter sind jeweils charakteristisch für eine in der Ladestation insgesamt anfallende thermische Last und damit zugleich relevant für die Beurteilung eines Vorliegens des Überlastzustands.

Das Kühlmedium ist insbesondere das in dem zur Kühlung der Ladestation vorgesehenen Kühlmedienkreislauf zirkulierende Kühlmedium, insbesondere Kühlwasser, optional in Kombination mit einem Frostschutzmittel, insbesondere Glykol. Insbesondere ist das Kühlmedium verschieden von dem in dem thermodynamischen Kreisprozess der Klimatisierungsvorrichtung verwendeten Kältemittel. Als Kühlmedien-Temperatur wird in einer Ausgestaltung eine Kühlmedientank-Temperatur in einem Kühlmedientank, insbesondere Wassertank, erfasst, wobei der Kühlmedientank insbesondere als ein Vorrats- und/oder Puffergefäß für den Kühlmedienkreislauf dient und insbesondere in den Kühlmedienkreislauf eingebunden ist. Somit ist die Kühlmedientank-Temperatur charakteristisch für eine Temperatur des Kühlmedienkreislaufs und damit eine in dem Kühlmedienkreislauf anfallende thermische Last.

In einer Ausgestaltung wird in dem Überlast-Prüfschritt festgestellt, dass der Überlastzustand vorliegt, wenn der Abregelungsfaktor den vorbestimmten ersten Lastzustands-Schwellenwert überschreitet, und zusätzlich die Energiespeicher-Temperatur und die Kühlmedien-Temperatur ihre jeweils zugeordneten ersten Wärmeparameter-Schwellenwerte überschreiten.

Alternativ oder zusätzlich wird in dem Überlast-Prüfschritt festgestellt, dass der Überlastzustand nicht vorliegt, wenn der Abregelungsfaktor den vorbestimmten ersten Lastzustands-Schwellenwert abzüglich des Lastzustands-Hysteresewerts unterschreitet, und zusätzlich die Energiespeicher-Temperatur und die Kühlmedien-Temperatur ihre jeweils zugeordneten ersten Wärmeparameter-Schwellenwerte abzüglich des jeweiligen Wärmeparameter-Hysteresewerts unterschreiten.

Die Energiespeicher-Temperatur kann beispielsweise einen zulässigen Wertebereich von -20 °C bis 45 °C haben. Die Kühlmedien-Temperatur, insbesondere die Kühlmedientank-Temperatur kann einen zulässigen Wertebereich von -20 °C bis 35 °C haben.

In einer Ausführungsform beträgt der vorbestimmte erste Lastzustands-Schwellenwert von 0,3 bis 0,6. Alternativ oder zusätzlich beträgt der vorbestimmte zweite Lastzustands-Schwellenwert von 0,1 bis 0,4. Alternativ oder zusätzlich beträgt der Lastzustands-Hysteresewert von 0,2 bis 0,6, insbesondere bis 0,3.

Alternativ oder zusätzlich beträgt der der Energiespeicher-Temperatur zugeordnete erste Wärmeparameter-Schwellenwert von 30 °C bis 40 °C. Alternativ oder zusätzlich beträgt der der Energiespeicher-Temperatur zugeordnete zweite Wärmeparameter-Schwellenwert von 25 °C bis 35 °C. Alternativ oder zusätzlich beträgt der der Energiespeicher-Temperatur zugeordnete Wärmeparameter-Hysteresewert von 5 °C bis 15 °C.

Weiter alternativ oder zusätzlich beträgt der der Kühlmedien-Temperatur, insbesondere der Kühlmedientank-Temperatur, zugeordnete erste Wärmeparameter-Schwellenwert von 28 °C bis 35 °C. Alternativ oder zusätzlich beträgt der der Kühlmedien-Temperatur, insbesondere der Kühlmedientank-Temperatur, zugeordnete zweite Wärmeparameter-Schwellenwert von 20 °C bis 30 °C. Alternativ oder zusätzlich beträgt der der Kühlmedien-Temperatur, insbesondere der Kühlmedientank-Temperatur, zugeordnete Wärmeparameter-Hysteresewert von 5 °C bis 15 °C.

Gemäß einer Weiterbildung der Erfindung ist vorgesehen, dass die Klimatisierungsvorrichtung in einem Abschaltbetrieb betrieben wird, wenn eine Abschaltbedingung erfüllt ist.

Dass die Klimatisierungsvorrichtung in dem Abschaltbetrieb betrieben wird, bedeutet im Kontext der vorliegenden technischen Lehre insbesondere, dass der Kompressor der Klimatisierungsvorrichtung abgeschaltet wird.

In einer Ausführungsform ist die Abschaltbedingung insbesondere erfüllt, wenn der Lastzustand, insbesondere die mindestens eine Lastgröße und/oder der Abregelungsfaktor, eine vorbestimmte Abschaltschwelle überschreitet.

In einer Ausgestaltung ist die vorbestimmte Abschaltschwelle verschieden von dem vorbestimmten ersten Lastzustands-Schwellenwert, insbesondere ist die vorbestimmte Abschaltschwelle größer als der vorbestimmte erste Lastzustands-Schwellenwert.

In einer Ausführungsform ist die Abschaltbedingung nicht mehr erfüllt, insbesondere wird die Klimatisierungsvorrichtung nicht mehr in dem Abschaltbetrieb betrieben, wenn der Lastzustand, insbesondere die mindestens eine Lastgröße und/oder der Abregelungsfaktor, die vorbestimmte Abschaltschwelle - optional abzüglich eines Abschalt-Hysteresewerts - unterschreitet. Insbesondere wird der Kompressor wieder gestartet, wenn festgestellt wird, dass die vorbestimmte Abschaltschwelle - optional abzüglich des Abschalt-Hysteresewerts - nicht mehr überschritten ist.

Die vorbestimmte Abschaltschwelle kann insbesondere von 0,5 bis 0,8 betragen. Der Abschalt-Hysteresewert kann insbesondere von 0,4 bis 0,8, insbesondere von 0,5 bis 0,7 betragen.

In einer Ausführungsform wird in einem separaten Abschalt-Prüfschritt, insbesondere außerhalb der anderen Verfahrensschritte und/oder zeitlich unabhängig von den anderen Verfahrensschritten, geprüft, ob die Abschaltbedingung vorliegt, das heißt ob der Lastzustand, insbesondere die mindestens eine Lastgröße und/oder der Abregelungsfaktor, die vorbestimmte Abschaltschwelle überschreitet, oder die vorbestimmte Abschaltschwelle - optional abzüglich eines Abschalt-Hysteresewerts - unterschreitet. Der separate Abschalt-Prüfschritt wird insbesondere wiederholt durchgeführt, insbesondere zyklisch, insbesondere mit vorbestimmter zeitlicher Taktung, insbesondere mit einer Frequenz von 1 Hz bis 10 Hz, besonders bevorzugt 5 Hz.

In einer Ausführungsform wird der Abregelungsfaktor in dem Abschaltbetrieb konstant gehalten.

In einer weiteren Ausführungsform wird - insbesondere zusätzlich - die Ladestation auch bei Beenden des Abschaltbetriebs mit dem konstant gehaltenen Abregelungsfaktor weiter betrieben.

Dabei erfolgt der Weiterbetrieb mit dem konstant gehalten Abregelungsfaktor insbesondere so lange, bis der Abregelungsfaktor neu ermittelt wird, oder für eine vorbestimmte Zeitdauer.

Gemäß einer Weiterbildung der Erfindung ist vorgesehen, dass, wenn in dem Überlast-Prüfschritt festgestellt wird, dass ein Überlastzustand vorliegt, - insbesondere in einem Kühlabschalt-Prüfschritt - geprüft wird, ob die Kühlmedien-Temperatur des Kühlmediums des Kühlmedienkreislaufs, insbesondere die Kühlmedientank-Temperatur, einen vorbestimmten Kühlabschalt-Grenzwert überschreitet, wobei eine Energiespeicher-Kühlung eines elektrischen Energiespeichers der Ladestation abgeschaltet wird, wenn die Kühlmedien-Temperatur den vorbestimmten Kühlabschalt-Grenzwert überschreitet, insbesondere wenn in dem Kühlabschalt-Prüfschritt festgestellt wird, dass die Kühlmedien-Temperatur den vorbestimmten Kühlabschalt-Grenzwert überschreitet.

Dass die Energiespeicher-Kühlung des elektrischen Energiespeichers abgeschaltet wird, bedeutet im Kontext der vorliegenden technischen Lehre insbesondere, dass mindestens ein Ventilator, der eingerichtet ist, um den Kühlluftstrom zur Kühlung des Energiespeichers zu erzeugen, ausgeschaltet wird.

Gemäß einer Weiterbildung der Erfindung ist vorgesehen, dass die Energiespeicher-Kühlung aktiviert wird, wenn die Kühlmedien-Temperatur höchstens dem vorbestimmten Kühlabschalt-Grenzwert entspricht.

Dass die Energiespeicher-Kühlung aktiviert wird, bedeutet im Kontext der vorliegenden technischen Lehre insbesondere, dass der mindestens eine Ventilator zur Erzeugung des Kühlluftstroms eingeschaltet wird.

In einer Ausführungsform beträgt der Kühlabschalt-Grenzwert von 20 °C bis 25 °C.

Die Erfindung umfasst auch ein Computerprogramm, welches Anweisungen umfasst, die bei der Ausführung des Computerprogramms durch eine Rechenvorrichtung, insbesondere eine Steuervorrichtung zum Betreiben einer Ladestation, diese veranlassen, das erfindungsgemäße Verfahren oder ein Verfahren nach einer der zuvor beschriebenen Ausführungsformen auszuführen.

Die Aufgabe wird auch gelöst, indem eine Steuervorrichtung zum Betreiben einer Ladestation, insbesondere für Elektrofahrzeuge, geschaffen wird, die eingerichtet ist zur Durchführung des erfindungsgemäßen Verfahrens oder eines Verfahrens nach einer oder mehreren der zuvor beschriebenen Ausführungsformen. In Zusammenhang mit der Steuervorrichtung ergeben sich insbesondere diejenigen Vorteile, die zuvor bereits in Zusammenhang mit dem Verfahren erläutert wurden.

Die Aufgabe wird schließlich auch gelöst, indem eine Ladestation, insbesondere für Elektrofahrzeuge, geschaffen wird, die eine erfindungsgemäße Steuervorrichtung oder eine

Steuervorrichtung nach einer oder mehreren der zuvor beschriebenen Ausführungsformen aufweist. In Zusammenhang mit der Ladestation ergeben sich insbesondere diejenigen Vorteile, die zuvor bereits in Zusammenhang mit dem Verfahren oder der Ladestation erläutert wurden.

Die Ladestation weist insbesondere mindestens ein Merkmal auf, das zuvor explizit oder implizit in Zusammenhang mit dem Verfahren als Merkmal der Ladestation beschrieben wurde, insbesondere eine Kombination solcher Merkmale. Insofern wird auf die vorangegangene, in Zusammenhang mit dem Verfahren gegebene Beschreibung der Ladestation verwiesen.

Insbesondere ist die Steuervorrichtung mit der Klimatisierungsvorrichtung der Ladestation zu deren Ansteuerung wirkverbunden. Weiterhin ist die Steuervorrichtung insbesondere mit der Leistungselektronik der Ladestation zu deren Ansteuerung wirkverbunden. Optional ist die Steuervorrichtung mit einer Kühlvorrichtung, insbesondere mit einem Kühlmedienkreislauf, der Ladestation zu deren Ansteuerung wirkverbunden.

Die Erfindung wird im Folgenden anhand der Zeichnung näher erläutert. Dabei zeigen:

Figur 1     eine schematische Darstellung eines Ausführungsbeispiels einer Ladestation mit einem Ausführungsbeispiel einer Steuervorrichtung, und

Figur 2     eine schematische Darstellung eines Ausführungsbeispiels eines Verfahrens zum Betreiben der Ladestation.

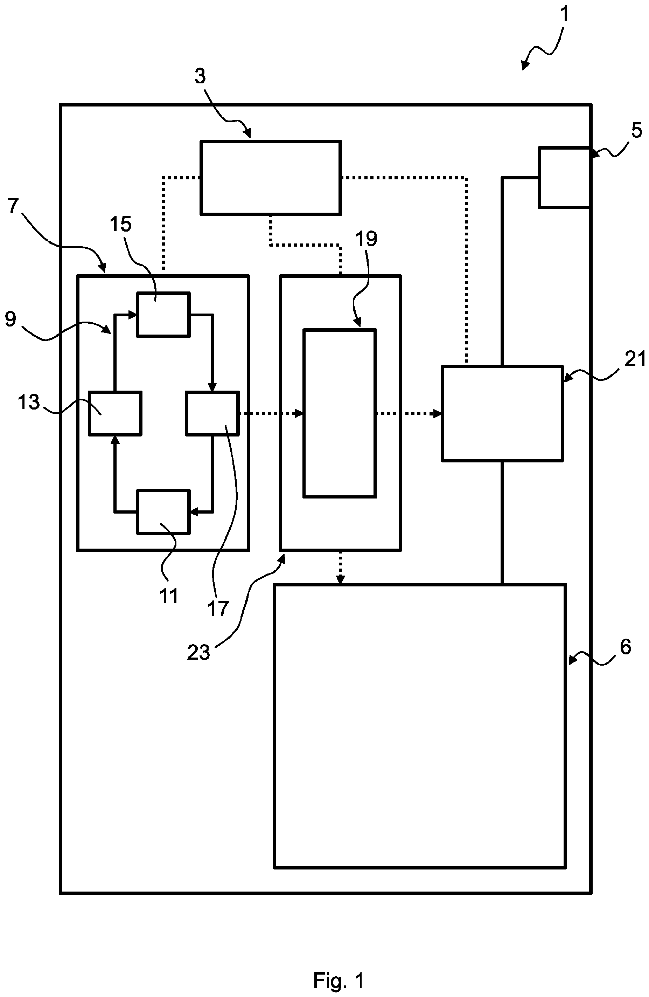

**Fig. 1** zeigt eine schematische Darstellung eines Ausführungsbeispiels einer Ladestation 1, insbesondere für Elektrofahrzeuge, mit einem Ausführungsbeispiel einer Steuervorrichtung 3.

Die Ladestation 1 weist mindestens einen Ladepunkt 5 auf, wobei an jedem Ladepunkt 5 jeweils beispielsweise ein Elektrofahrzeug geladen werden kann. Außerdem weist die Ladestation 1 einen elektrischen Energiespeicher 6 zur Zwischenspeicherung von elektrischer Energie zum Laden insbesondere von Elektrofahrzeugen auf. Die Ladestation 1 kann an ein Stromnetz angeschlossen sein, wobei dann der elektrische Energiespeicher 6 regelmäßig aus dem Stromnetz geladen wird; sie kann aber auch als mobile Ladestation 1 ausgebildet sein, die unabhängig von einem Stromnetz betrieben werden kann, wobei dann der elektrische Energiespeicher 6 nur sporadisch, insbesondere bei Bedarf, nachgeladen wird.

Weiter weist die Ladestation eine Klimatisierungsvorrichtung 7 auf, die hier als Kompressionskältemaschine zur Durchführung eines thermodynamischen Kreisprozesses ausgebildet ist. Sie weist einen geschlossenen Kältemittelkreislauf 9 auf, der - in der angegebenen Reihenfolge in Strömungsrichtung des Kältemittels - folgende Kältekomponenten aufweist: einen Kältemittelverdichter 11, einen Kondensator 13, eine Drosselvorrichtung 15 und einen Verdampfer 17.

Insbesondere ist die Klimatisierungsvorrichtung 7 eingerichtet, um einen zur Kühlung der Ladestation 1 vorgesehenen Kühlmedienkreislauf 19, insbesondere einen Kühlwasserkreislauf, rückzukühlen. Der Kühlmedienkreislauf 19 wiederum kühlt vorzugsweise direkt eine Leistungselektronik 21 der Ladestation 1 und zusätzlich einen Kühlluftstrom, wobei mittels des Kühlluftstroms insbesondere der elektrische Energiespeicher 6 der Ladestation 1 gekühlt wird.

Der Kühlmedienkreislauf 19 ist insbesondere Teil einer Kühlvorrichtung 23, die außer dem Kühlmedienkreislauf 19 beispielsweise noch Ventilatoren, insbesondere einen Ventilator zur Erzeugung des Kühlluftstroms, umfassen kann.

Die Steuervorrichtung 3 ist insbesondere eingerichtet zur Durchführung eines im Folgenden näher beschriebenen Verfahrens.

Im Rahmen des Verfahrens wird ein Lastzustand einer Klimatisierungsvorrichtung 7 ermittelt, und eine Ladeleistung der Ladestation 1 wird in Abhängigkeit von dem ermittelten Lastzustand beeinflusst, insbesondere begrenzt oder eingestellt.

Bevorzugt wird der Lastzustand der Klimatisierungsvorrichtung 7 wiederholt, insbesondere zyklisch, insbesondere mit vorbestimmter zeitlicher Taktung, insbesondere mit einer Frequenz von 1 Hz bis 10 Hz, besonders bevorzugt 5 Hz, ermittelt, wobei daraufhin die Ladeleistung abhängig von dem ermittelten Lastzustand beeinflusst und optional die im Folgenden beschriebenen weiteren Verfahrensschritte durchgeführt werden.

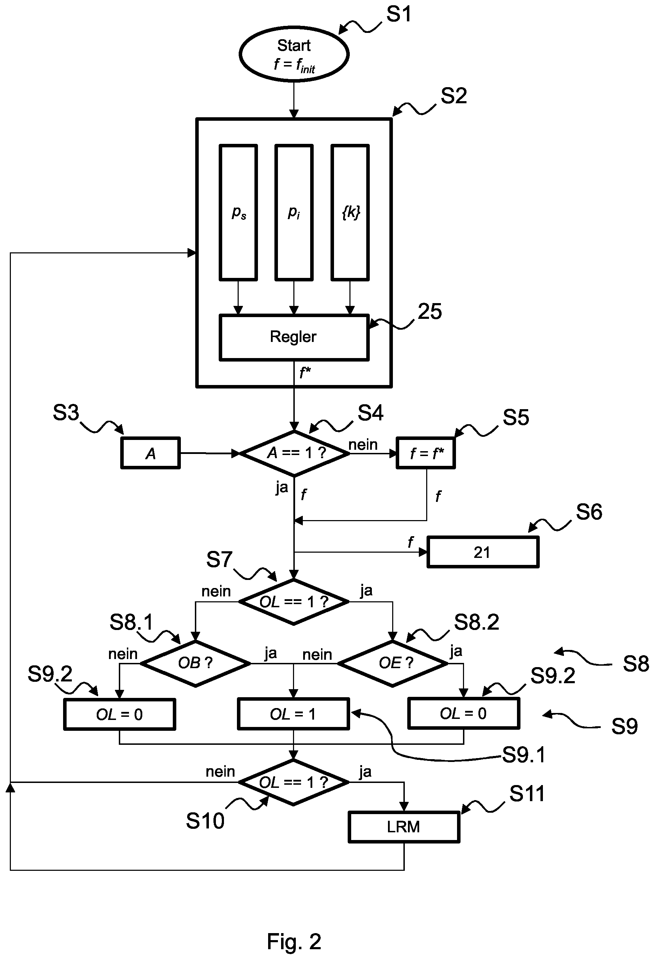

**Fig. 2** zeigt eine schematische Darstellung eines Ausführungsbeispiels des Verfahrens zum Betreiben der Ladestation 1.

Gleiche und funktionsgleiche Elemente sind in allen Figuren mit gleichen Bezugszeichen versehen, sodass insofern jeweils auf die vorangegangene Beschreibung verwiesen wird.

Das hier dargestellte Ausführungsbeispiel des Verfahrens startet in einem ersten Schritt S 1, in dem ein Abregelungsfaktor $f$ mit einem Initialisierungswert $f_{init}$, beispielsweise $f_{init} = 0$, initialisiert wird.

In einem zweiten Schritt S2 wird der Lastzustand der Klimatisierungsvorrichtung 7 ermittelt, und in Abhängigkeit von dem ermittelten Lastzustand wird ein aktueller Wert $f^*$ für den Abregelungsfaktor $f$ bestimmt.

Der Lastzustand wird ermittelt, indem mindestens eine Lastgröße der Klimatisierungsvorrichtung 7 mit einem vorbestimmten Lastgrößen-Zielwert verglichen wird, der der mindestens einen Lastgröße zugeordnet ist. Bei dem hier dargestellten Ausführungsbeispiel wird als die mindestens eine Lastgröße ein Ist-Kondensatordruck $p_i$ der Klimatisierungsvorrichtung 7 verwendet, und als der vorbestimmte Lastgrößen-Zielwert wird ein Soll-Kondensatordruck $p_s$ verwendet. Als der Ist-Kondensatordruck $p_i$ wird insbesondere der Kondensationsdruck des Kältemittels in dem Kondensator 13 gemessen und verwendet.

Der aktuelle Wert $f^*$ des Abregelungsfaktors wird durch einen Regler 25, insbesondere einen PI-Regler, bestimmt, in den der Ist-Kondensatordruck $p_i$ als Ist-Wert und der Soll-Kondensatordruck $p_s$ als Soll-Wert eingehen, wobei der aktuelle Wert $f^*$ des Abregelungsfaktors in Abhängigkeit einer Regelabweichung des Ist-Werts von dem Soll-Wert sowie insbesondere in Abhängigkeit von durch einen Betreiber parametrierbaren Regelparametern $\{k\}$ - wie beispielsweise einer Regelverstärkung und einer Nachstellzeit - berechnet wird. Der aktuelle Wert $f^*$ des Abregelungsfaktors nimmt dabei insbesondere Werte aus dem Intervall [0,1] an.

In einem dritten Schritt S3, der separat - das heißt insbesondere zeitlich unabhängig - von dem restlichen Verfahren durchgeführt werden kann, und der auch als Abschalt-Prüfschritt bezeichnet wird, wird geprüft, ob eine Abschaltbedingung für einen Abschaltbetrieb der Klimatisierungsvorrichtung 7 vorliegt.

Als die Abschaltbedingung wird insbesondere geprüft, ob der aktuelle Wert $f^*$ des Abregelungsfaktors eine vorbestimmte Abschaltschwelle überschreitet, in diesem Fall ist die Abschaltbedingung erfüllt. Es wird auch geprüft, ob der aktuelle Wert $f^*$ des Abregelungsfaktors die vorbestimmte Abschaltschwelle - optional abzüglich eines Abschalt-Hysteresewerts - unterschreitet, in diesem Fall ist die Abschaltbedingung nicht mehr erfüllt. Überschreitet der aktuelle Wert $f^*$ die vorbestimmte Abschaltschwelle, wird einer logischen Abschaltvariable A der Wert 1 zugewiesen und der Kompressor 11 abgeschaltet oder - falls er bereits abgeschaltet ist - nicht wieder angeschaltet; unterschreitet der aktuelle Wert $f^*$ die vorbestimmte Abschaltschwelle - optional abzüglich des Abschalt-Hysteresewerts - wird der Abschaltvariable A der Wert 0 zugewiesen, und der Kompressor 11 wird entweder nicht abgeschaltet oder - wenn er abgeschaltet ist - angeschaltet. Optional wird der Abschaltvariable A in dem Hysteresebereich zwischen der vorbestimmten Abschaltschwelle abzüglich des Abschalt-Hysteresewerts und der vorbestimmten Abschaltschwelle kein neuer Wert zugewiesen, das heißt sie behält den zuvor zugewiesenen Wert bei. Weiter optional wird der Abschaltvariable ausgehend von dem Wert 1 der Wert 0 erst dann wieder zugewiesen, wenn eine vorbestimmte Zeitdauer verstrichen ist, seit die Abschaltbedingung erstmals wieder nicht mehr erfüllt ist. Alternativ wird der Abschaltvariable A ausgehend von dem Wert 1 der Wert 0 erst dann wieder zugewiesen, wenn sich der aktuelle Wert $f^*$ des Abregelungsfaktors ändert.

Im Kontext der vorliegenden technischen Lehre werden in Zusammenhang mit logischen Variablen stets die Werte 0 und 1 verwendet, die insoweit den logischen Werten "false" (0) und "true" (1) entsprechen. Diese Werte können aber auch in beliebiger anderer Weise repräsentiert werden, ohne das Verfahren substantiell zu verändern. Wichtig ist insoweit nur, dass eine logische Variable zwei verschiedene diskrete Werte annehmen kann.

In einem vierten Schritt S4 wird geprüft, ob der Wert der Abschaltvariable gleich 1 ist. Ist dies der Fall, behält der Abregelungsfaktor $f$ seinen zuletzt zugewiesenen Wert, das heißt der zuletzt zugewiesene Wert wird nicht durch den aktuellen Wert $f^*$ ersetzt, vielmehr wird bevorzugt der aktuelle Wert $f^*$ verworfen. Ist dagegen der Wert der Abschaltvariable nicht gleich 1, das heißt insbesondere gleich 0, wird dem Abregelungsfaktor $f$ in einem fünften Schritt S5 der aktuelle Wert $f^*$ zugewiesen, das heißt der zuletzt zugewiesene Wert wird durch den aktuellen Wert $f^*$ ersetzt.

In einem sechsten Schritt S6 wird eine maximale Ladeleistung $P_{max}$ der Ladestation 1 in Abhängigkeit von dem Abregelungsfaktor $f$ reduziert, insbesondere wird gemäß Gleichung (1) die maximale Ladeleistung $P_{max}$ berechnet als Produkt einer nominalen Ladeleistung $P_{nom}$ mit $(1-f)$.

Als die Ladeleistung kann eine aktive Ladeleistung, mit welcher beispielsweise der Antriebsenergiespeicher des Elektrofahrzeugs durch die Ladestation 1 geladen wird, und/oder eine passive Ladeleistung, mit welcher der elektrische Energiespeicher 6 aus einem Stromnetz geladen wird, beeinflusst werden.

In einem siebten Schritt S7 wird geprüft, ob eine logische Überlastvariable OL den Wert 1 aufweist. Ist dies nicht der Fall, wird in einem ersten achten Teil-Schritt S8.1 eines achten Schritts S8, der auch als Überlast-Prüfschritt bezeichnet wird, geprüft, ob eine Startbedingung OB für einen Überlastzustand der Klimatisierungsvorrichtung 7 vorliegt. Dies ist der Fall, wenn der Abregelungsfaktor $f$ einen vorbestimmten ersten Lastzustands-Schwellenwert überschreitet, und zusätzlich eine Energiespeicher-Temperatur des elektrischen Energiespeichers 6 und eine Kühlmedien-Temperatur des Kühlmedienkreislaufs 19 jeweils zugeordnete erste Wärmeparameter-Schwellenwerte überschreiten. In diesem Fall wird in einem ersten neunten Teil-Schritt S9.1 eines neunten Schritts S9 der logischen Überlastvariable OL der Wert 1 zugewiesen. Andernfalls, wenn die Startbedingung OB in dem ersten achten Teil-Schritt S8.1 nicht erfüllt ist, wird in einem zweiten neunten Teil-Schritt S9.2 des neunten Schritts S9 der logischen Überlastvariable OL der Wert 0 zugewiesen.

Wird in dem siebten Schritt S7 festgestellt, dass die logische Überlastvariable OL den Wert 1 aufweist, wird in einem zweiten achten Teil-Schritt S8.2 des achten Schritts S8 geprüft, ob eine Endbedingung OE für den Überlastzustand vorliegt. Dies ist der Fall, wenn der Abregelungsfaktor $f$ einen zweiten Lastzustands-Schwellenwert, insbesondere den vorbestimmten ersten Lastzustands-Schwellenwert abzüglich des Lastzustands-Hysteresewerts, unterschreitet, und zusätzlich die Energiespeicher-Temperatur und die Kühlmedien-Temperatur jeweils zugeordnete zweite Wärmeparameter Schwellenwerte, insbesondere ihre jeweils zugeordneten ersten Wärmeparameter-Schwellenwerte abzüglich des jeweiligen Wärmeparameter-Hysteresewerts, unterschreiten. In diesem Fall wird in dem zweiten neunten Teil-Schritt S9.2 des neunten Schritts S9 der logischen Überlastvariable OL der Wert 0 zugewiesen. Andernfalls, wenn die Endbedingung OE in dem zweiten achten Teil-Schritt S8.2 nicht erfüllt ist, wird in dem ersten neunten Teil-Schritt S9.1 des neunten Schritts S9 der logischen Überlastvariable OL der Wert 1 zugewiesen, oder - im Ergebnis gleichbedeutend - dieser Wert wird beibehalten.

Bevorzugt ist der vorbestimmte erste Lastzustands-Schwellenwert - insbesondere um den Lastzustands-Hysteresewert - größer als der vorbestimmte zweite Lastzustands-Schwellenwert. Außerdem sind die ersten Wärmeparameter-Schwellenwerte bevorzugt jeweils - insbesondere um den jeweiligen Wärmeparameter-Hysteresewert - größer als die zugeordneten zweiten Wärmeparameter-Schwellenwerte. Weiterhin ist bevorzugt die vorbestimmte Abschaltschwelle größer als der vorbestimmte erste Lastzustands-Schwellenwert.

In einem zehnten Schritt S 10 wird sodann erneut geprüft, ob die logische Überlastvariable *OL* den Wert 1 aufweist. Ist dies der Fall und liegt somit ein Überlastzustand vor, wird in einem elften Schritt S11 mindestens eine lastreduzierende Maßnahme *LRM* eingeleitet, das heißt zumindest eine weitere ansteuerbare Komponente der Ladestation 1 wird zumindest mit reduzierter Leistung betrieben - oder abgeschaltet. Die zumindest eine weitere ansteuerbare Komponente kann dabei ausgewählt sein aus einer Gruppe, bestehend aus: einer Energiespeicher-Kühlung, die eingerichtet ist zur Kühlung des Energiespeichers 6, einer Anzeigevorrichtung, insbesondere einem Außendisplay zur Bereitstellung von werblichen oder unterhaltenden Inhalten für Personen, die Vorrichtungen wie Elektrofahrzeuge an der Ladestation 1 laden, einer Hintergrundbeleuchtung der Anzeigevorrichtung, und einer Kombination aus mindestens zwei der genannten ansteuerbaren Komponenten.

Bevorzugt wird in dem elften Schritt S11 geprüft, ob die Kühlmedien-Temperatur einen vorbestimmten Kühlabschalt-Grenzwert überschreitet, wobei eine Energiespeicher-Kühlung des elektrischen Energiespeichers 6 abgeschaltet wird, wenn die Kühlmedien-Temperatur den vorbestimmten Kühlabschalt-Grenzwert überschreitet. Insbesondere wird dann ein Ventilator, der eingerichtet ist, um den Kühlluftstrom zur Kühlung des Energiespeichers 6 zu erzeugen, ausgeschaltet.

Die Energiespeicher-Kühlung wird bevorzugt wieder aktiviert, das heißt der Ventilator wird wieder eingeschaltet, wenn die Kühlmedien-Temperatur höchstens dem vorbestimmten Kühlabschalt-Grenzwert entspricht, das heißt insbesondere kleiner als oder gleich dem vorbestimmten Kühlabschalt-Grenzwert ist.

Nach dem elften Schritt S11 wird das Verfahren bevorzugt wieder in den zweiten Schritt S2 fortgesetzt.

Wird in den zehnten Schritt S10 festgestellt, dass die logische Überlastvariable *OL* den Wert 1 nicht aufweist, das heißt dass sie insbesondere den Wert 0 aufweist, wird das Verfahren vorzugsweise direkt wieder in dem zweiten Schritt S2 fortgesetzt, insbesondere ohne lastreduzierende Maßnahmen. Es ist möglich, dass in diesem Fall, vor der Rückkehr in den zweiten Schritt S2, gegebenenfalls zuvor initiierte lastreduzierende Maßnahmen *LRM* wieder zurückgenommen werden.

Insbesondere wird somit das Verfahren insgesamt wiederholt, insbesondere zyklisch, insbesondere mit der vorbestimmten zeitlichen Taktung, insbesondere mit einer Frequenz von 1 Hz bis 10 Hz, besonders bevorzugt 5 Hz, durchgeführt.

**Patentansprüche**

1. Verfahren zum Betreiben einer Ladestation (1), insbesondere für Elektrofahrzeuge, wobei

    - ein Lastzustand einer Klimatisierungsvorrichtung (7) der Ladestation (1) ermittelt wird, und wobei
    - eine Ladeleistung der Ladestation (1) in Abhängigkeit von dem ermittelten Lastzustand beeinflusst wird.

2. Verfahren nach Anspruch 1, wobei als die Ladeleistung

    - eine aktive Ladeleistung der Ladestation (1), mit welcher ein Antriebsenergiespeicher einer mobilen Vorrichtung, insbesondere eines Elektrofahrzeugs, durch die Ladestation (1) geladen wird, und/oder
    - eine passive Ladeleistung der Ladestation (1), mit welcher ein elektrische Energiespeicher (6) der Ladestation (1) aus einem Stromnetz geladen wird,

    beeinflusst wird.

3. Verfahren nach einem der vorhergehenden Ansprüche, wobei in Abhängigkeit von dem ermittelten Lastzustand ein Abregelungsfaktor bestimmt wird, wobei die Ladeleistung in Abhängigkeit von dem Abregelungsfaktor beeinflusst, insbesondere begrenzt oder eingestellt, insbesondere reduziert wird.

4. Verfahren nach einem der vorhergehenden Ansprüche, wobei der Lastzustand ermittelt wird, indem mindestens eine Lastgröße der Klimatisierungsvorrichtung (7) mit einem der mindestens einen Lastgröße zugeordneten vorbestimmten Lastgrößen-Zielwert verglichen wird.

5. Verfahren nach einem der vorhergehenden Ansprüche, wobei die mindestens eine Lastgröße ausgewählt ist aus einer Kondensatortemperatur der Klimatisierungsvorrichtung (7), einem Kondensatordruck der Klimatisierungsvorrichtung (7), und einer Kombination der genannten Lastgrößen.

6. Verfahren nach einem der vorhergehenden Ansprüche, wobei der Abregelungsfaktor durch einen Regler (25) bestimmt wird, in den ein momentaner Wert der mindestens einen Lastgröße als Ist-Wert und der der mindestens einen Lastgröße zugeordnete vorbestimmte Lastgrößen-Zielwert als Soll-Wert eingeht, wobei der Abregelungsfaktor in Abhängigkeit einer Regelabweichung des Ist-Werts von dem Soll-Wert ermittelt, insbesondere berechnet wird.

7. Verfahren nach einem der vorhergehenden Ansprüche, wobei in einem Überlast-Prüfschritt geprüft wird, ob ein Überlastzustand der Klimatisierungsvorrichtung (7) vorliegt, wobei zumindest eine weitere ansteuerbare Komponente der Ladestation (1) zumindest mit reduzierter Leistung betrieben wird, wenn in dem Überlast-Prüfschritt festgestellt wird, dass ein Überlastzustand der Klimatisierungsvorrichtung (7) vorliegt.

8. Verfahren nach Anspruch 7, wobei in dem Überlast-Prüfschritt festgestellt wird, dass der Überlastzustand vorliegt, wenn

   - der Lastzustand, insbesondere der Abregelungsfaktor, einen vorbestimmten ersten Lastzustands-Schwellenwert überschreitet, und zusätzlich
   - mindestens ein weiterer Wärmeparameter der Ladestation (1) einen zugeordneten ersten Wärmeparameter-Schwellenwert überschreitet.

9. Verfahren nach einem der Ansprüche 7 oder 8, wobei in dem Überlast-Prüfschritt festgestellt wird, dass kein Überlastzustand vorliegt, wenn

   - der Lastzustand, insbesondere der Abregelungsfaktor, einen vorbestimmten zweiten Lastzustands-Schwellenwert unterschreitet, und zusätzlich
   - der mindestens eine weitere Wärmeparameter einen zugeordneten zweiten Wärmeparameter-Schwellenwert unterschreitet.

10. Verfahren nach einem der vorhergehenden Ansprüche, wobei der mindestens eine weitere Wärmeparameter ausgewählt ist aus einer Gruppe, bestehend aus: einer Energiespeicher-Temperatur eines elektrischen Energiespeichers (6) der Ladestation (1), einer Kühlmedien-Temperatur eines Kühlmediums eines Kühlmedienkreislaufs (19), und einer Kombination der genannten Wärmeparameter.

11. Verfahren nach einem der vorhergehenden Ansprüche, wobei die Klimatisierungsvorrichtung (7) in einem Abschaltbetrieb betrieben wird, wenn eine Abschaltbedingung erfüllt ist, wobei vorzugsweise der Abregelungsfaktor in dem Abschaltbetrieb konstant gehalten wird, und wobei weiter vorzugsweise die Ladestation (1) auch bei Beenden des Abschaltbetriebs mit dem konstant gehaltenen Abregelungsfaktor weiter betrieben wird, insbesondere bis der Abregelungsfaktor neu ermittelt wird.

12. Verfahren nach einem der vorhergehenden Ansprüche, wobei, wenn in dem Überlast-Prüfschritt festgestellt wird, dass ein Überlastzustand vorliegt, geprüft wird, ob eine Kühlmedien-Temperatur eines Kühlmediums eines Kühlmedienkreislaufs (19) einen vorbestimmten Kühlabschalt-Grenzwert überschreitet, wobei eine Energiespeicher-Kühlung eines elektrischen Energiespeichers (6) der Ladestation (1) abgeschaltet wird, wenn die Kühlmedien-Temperatur den vorbestimmten Kühlabschalt-Grenzwert überschreitet.

13. Verfahren nach einem der vorhergehenden Ansprüche, wobei die Energiespeicher-Kühlung aktiviert wird, wenn die Kühlmedien-Temperatur höchstens dem vorbestimmten Kühlabschalt-Grenzwert entspricht.

14. Steuervorrichtung (3) zum Betreiben einer Ladestation (1), insbesondere für Elektrofahrzeuge, wobei die Steuervorrichtung (3) eingerichtet ist zur Durchführung eines Verfahrens nach einem der vorhergehenden Ansprüche.

15. Ladestation (1), insbesondere für Elektrofahrzeuge, mit einer Steuervorrichtung (3) nach Anspruch 14.

Fig. 1

Fig. 2

Europäisches
Patentamt

European
Patent Office

Office européen
des brevets

**EUROPÄISCHER RECHERCHENBERICHT**

Nummer der Anmeldung

EP 24 18 7528

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 110 239 383 A (NANJING KANGNI MECHANICAL & ELECTRICAL CO LTD) 17. September 2019 (2019-09-17) * Ansprüche 1-8; Abbildung 1 * ----- | 1,3-15 | INV. B60L53/302 B60L53/53 B60L53/62 |
| X | US 2023/166621 A1 (BRANDON JEFFREY [US] ET AL) 1. Juni 2023 (2023-06-01) * Absatz [0001] - Absatz [0013] * * Absatz [0022] - Absatz [0057]; Abbildungen 1, 2A, 2B, 2C * ----- | 1,3,14, 15 | |
| X | DE 10 2013 005507 A1 (RWE AG [DE]) 2. Oktober 2014 (2014-10-02) * Absatz [0001] - Absatz [0033] * * Ansprüche 1-10; Abbildungen 1, 2 * ----- | 1,3,14, 15 | |
| Y | DE 10 2018 103706 A1 (PORSCHE AG [DE]) 22. August 2019 (2019-08-22) * Absatz [0001] - Absatz [0018] * ----- | 1,2,14, 15 | |
| Y | CN 113 525 108 A (GUANGQI HONDA AUTOMOBILE CO; GUANGZHOU HONDA RES & DEVELOPMENT CO LTD) 22. Oktober 2021 (2021-10-22) * Ansprüche 1-10; Abbildung 1 * ----- | 1,2,14, 15 | RECHERCHIERTE SACHGEBIETE (IPC) B60L |

Der vorliegende Recherchenbericht wurde für alle Patentansprüche erstellt

| Recherchenort | Abschlußdatum der Recherche | Prüfer |
|---|---|---|
| Den Haag | 9. Dezember 2024 | Utz, Tilman |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
Dokument

EPO FORM 1503 03.82 (P04C03)

**EP 4 494 922 A1**

## ANHANG ZUM EUROPÄISCHEN RECHERCHENBERICHT
## ÜBER DIE EUROPÄISCHE PATENTANMELDUNG NR.

EP 24 18 7528

09-12-2024

| Im Recherchenbericht angeführtes Patentdokument | Datum der Veröffentlichung | Mitglied(er) der Patentfamilie | Datum der Veröffentlichung |
|---|---|---|---|
| CN 110239383 A | 17-09-2019 | KEINE | |
| US 2023166621 A1 | 01-06-2023 | KEINE | |
| DE 102013005507 A1 | 02-10-2014 | CA 2908551 A1 | 09-10-2014 |
| | | CN 105377620 A | 02-03-2016 |
| | | DE 102013005507 A1 | 02-10-2014 |
| | | DK 2981431 T3 | 11-09-2017 |
| | | EP 2981431 A2 | 10-02-2016 |
| | | ES 2635352 T3 | 03-10-2017 |
| | | HU E033961 T2 | 29-01-2018 |
| | | US 2016009191 A1 | 14-01-2016 |
| | | WO 2014161803 A2 | 09-10-2014 |
| DE 102018103706 A1 | 22-08-2019 | CN 110171312 A | 27-08-2019 |
| | | DE 102018103706 A1 | 22-08-2019 |
| | | EP 3527422 A1 | 21-08-2019 |
| | | US 2019255961 A1 | 22-08-2019 |
| CN 113525108 A | 22-10-2021 | KEINE | |

EPO FORM P0461